# EUROPEAN PATENT APPLICATION

(11) **EP 4 518 250 A1**
(43) Date of publication of application: **05.03.2025**
(21) Application number: 24195721.6
(22) Date of filing: 21.08.2024
(51) Int. Cl.: H04L 9/40, H04W 4/50, H04W 48/20, H04W 84/12, H04W 48/16

(54) **INFORMATION PROCESSING APPARATUS, CONTROL METHOD, AND PROGRAM**

(30) Priority: 28.08.2023 JP 2023137805; 28.08.2023 JP 2023137806
(71) Applicant: CANON KABUSHIKI KAISHA, Tokyo 146-8501 (JP)
(72) Inventor: EHARA, Jun, 146-8501 Tokyo (JP)
(74) Representative: Canon Europe Limited

(57) **Abstract**

A method of controlling an information processing apparatus (101) including a predetermined application program and capable of communicating with a communication apparatus (151) to execute: acquiring (S302), by using the predetermined application program, a predetermined password from a predetermined wireless profile managed by an operating system (OS) of the information processing apparatus (101) and corresponding to a first access point; executing (S405), by using the predetermined application program, first attempt processing that is processing for attempting establishment of a connection between a second access point different from the first access point and the information processing apparatus (101) using the predetermined password acquired from the predetermined wireless profile; and transmitting (S305), by using the predetermined application program, the predetermined password acquired from the predetermined wireless profile and information for specifying the second access point to the communication apparatus (151) based on success of the establishment of the connection between the second access point and the information processing apparatus (101) by the first attempt processing.

## Description

### BACKGROUND OF THE INVENTION

### Field of the Invention

The present invention relates to an information processing apparatus, a control method, and a program.

### Description of the Related Art

A form in which an information processing apparatus such as a smartphone transmits, to a communication apparatus such as a printer, information for connection to an access point and the communication apparatus uses the information to connect to the access point is known. Japanese Patent Laid-Open No. 2016-127545 describes that an information processing apparatus transmits information to a communication apparatus and sets, in the communication apparatus, a connection mode for determining a connection form between the information processing apparatus and the communication apparatus.

### SUMMARY OF THE INVENTION

As the form in which an information processing apparatus transmits, to a communication apparatus, information for connection to an access point becomes widely used, it is desirable to improve the convenience of the form.

An object of the present invention is to improve convenience of a form in which an information processing apparatus transmits, to a communication apparatus, information for connection to an access point.

The present invention in its first aspect provides a method of controlling an information processing apparatus as specified in claims 1 to 13.

The present invention in its second aspect provides a program as specified in claim 14.

The present invention in its third aspect provides an information processing apparatus as specified in claim 15.

Further features of the present invention will become apparent from the following description of embodiments with reference to the attached drawings.

### BRIEF DESCRIPTION OF THE DRAWINGS

FIG. 1 is a diagram illustrating an example of a communication system according to an embodiment of the present invention.
FIG. 2 illustrates an example of a configuration diagram of a terminal apparatus and a communication apparatus according to a first embodiment of the present invention.
FIG. 3 is a flowchart illustrating a network setup for the communication apparatus that is performed by the terminal apparatus according to the first embodiment of the present invention.
FIG. 4 is a flowchart illustrating a process of specifying setting information according to the first embodiment of the present invention.
FIGS. 5A to 5C illustrate examples of a selection screen and an entry screen that are displayed in the first embodiment of the present invention.
FIGS. 6A and 6B illustrate examples of a connection screen and a wireless profile screen that are displayed in the first embodiment of the present invention.
FIG. 7 is a flowchart illustrating a process of specifying setting information according to a second embodiment of the present invention.
FIG. 8 is a flowchart illustrating a process of specifying setting information according to a third embodiment of the present invention.

### DESCRIPTION OF THE EMBODIMENTS

### First Embodiment

An information processing apparatus and a communication apparatus that are included in a communication system according to the present embodiment will be described. In the present embodiment, as the information processing apparatus, a smartphone is exemplified. However, the information processing apparatus is not limited thereto. As the information processing apparatus, various apparatuses such as a terminal apparatus, a laptop PC, a tablet terminal, a personal digital assistant (PDA), and a digital camera can be used. In addition, in the present embodiment, as the communication apparatus, a printer is exemplified. However, the communication apparatus is not limited thereto. Various apparatuses can be used as the communication apparatus as long as the apparatuses can wirelessly communicate with the information processing apparatus. For example, in a case where the communication apparatus is a printer, an ink jet printer, a full-color laser beam printer, a monochrome printer, and the like can be used. Further, in addition to the printers, a copy machine, a facsimile machine, a terminal apparatus, a smartphone, a laptop PC, a tablet terminal, a PDA, a digital camera, a music playing device, a television, a smart speaker, and the like can be used as the communication apparatus. Further, a multi-function peripheral having a plurality of functions including a copy function, a facsimile function, and a print function can be used as the communication apparatus.

First, a system configuration for implementing the present embodiment will be described.

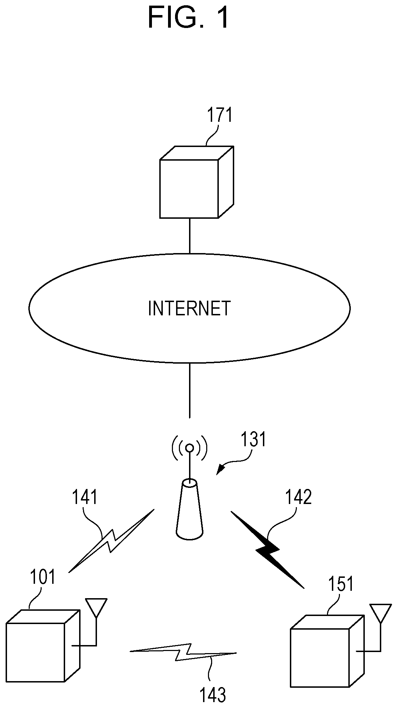

FIG. 1 is a diagram illustrating an example of the configuration of the communication system according to the present embodiment. The communication system includes a communication apparatus 151, a terminal apparatus 101, an access point (AP) 131, and an external server 171.

The terminal apparatus 101 is the information processing apparatus according to the present embodiment. The communication apparatus 151 is the communication apparatus according to the present embodiment. The AP 131 is an external apparatus present outside the terminal apparatus 101 and the communication apparatus 151. The external server 171 can provide a service through the Internet to the apparatuses connected to the AP 131.

The AP 131, the communication apparatus 151, and the terminal apparatus 101 are included in a local area network (LAN) formed by the AP 131. The AP 131 and the external server 171 are included in a wide area network (WAN).

In the present embodiment, in a case where an infrastructure connection described later is established, the terminal apparatus 101 can communicate with the communication apparatus 151 via the AP 131. In a case where a direct connection described later is established, the terminal apparatus 101 can directly communicate with the communication apparatus 151 without the AP 131. In the following description, a connection to an AP corresponds to a connection to a network formed by the AP. The AP may concurrently form a plurality of networks. In this case, the connection to the AP may be a connection to any one of the networks formed by the AP.

In the present embodiment, it is assumed that a connection 141 between the terminal apparatus 101 and the AP 131 and a connection 142 between the communication apparatus 151 and the AP 131 are connections by a communication method based on the IEEE802.11 series of standards. Specifically, the communication method based on the IEEE802.11 series of standards is Wireless Fidelity (Wi-Fi) (registered trademark). In the present embodiment, it is assumed that a connection 143 between the terminal apparatus 101 and the communication apparatus 151 is a connection by Wi-Fi or a connection by Bluetooth (registered trademark) Low Energy (BLE).

The communication method used for each of the connections is not limited thereto and may be Bluetooth Classic, Wi-Fi Aware, near-field communication (NFC), or the like. The AP 131 and the external server 171 can communicate with each other via the Internet. In a state in which the AP 131 is connected to the Internet, the Internet is available for use by the apparatuses (terminal apparatus 101 and communication apparatus 151) connected to the AP 131. Each of the connection 141 between the terminal apparatus 101 and the AP 131 and the connection 142 between the communication apparatus 151 and the AP 131 may be a connection by a wired LAN.

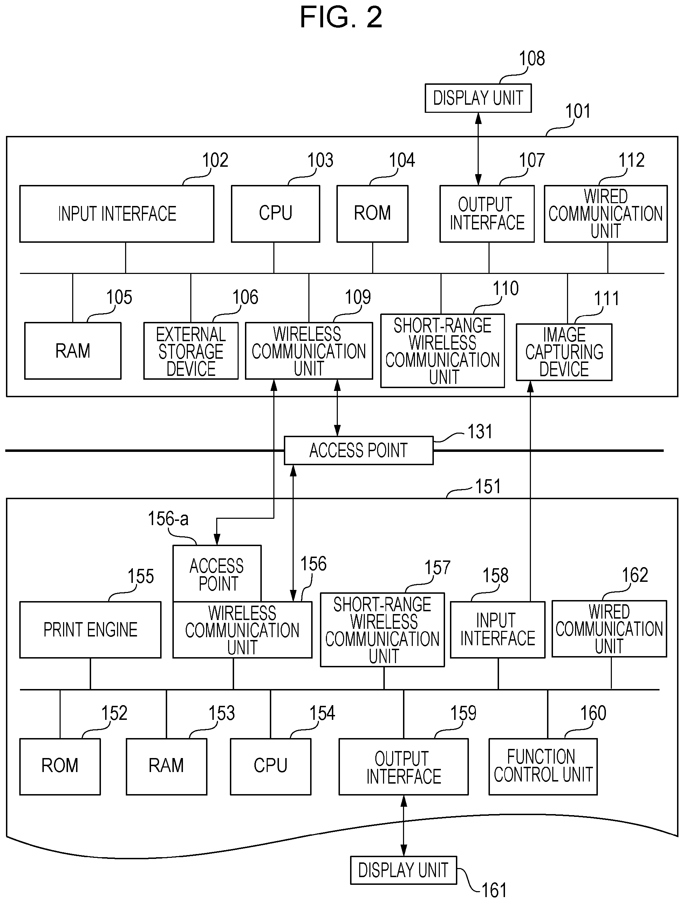

Next, a configuration of the information processing apparatus according to the present embodiment and a configuration of the communication apparatus that can communicate with the information processing apparatus according to the present embodiment will be described with reference to a block diagram of FIG. 2. In the present embodiment, the following configurations are described as an example. However, the present embodiment does not particularly limit functions to functions described with reference to FIG. 2 as long as an apparatus that can communicate with the communication apparatus can be used as the information processing apparatus according to the present embodiment.

The terminal apparatus 101 includes an input interface 102, a CPU 103, a ROM 104, a RAM 105, an external storage 106, an output interface 107, a display unit 108, a wireless communication unit 109, a short-range wireless communication unit 110, an image capturing device 111, and a wired communication unit 112. The CPU 103, the ROM 104, the RAM 105, and the like form a computer of the terminal apparatus 101. The terminal apparatus 101 is assumed to be a device such as a smartphone, but is not limited to the smartphone.

The input interface 102 receives data input and an operation instruction from a user and includes a physical keyboard, buttons, a touch panel, and the like. The output interface 107 described later and the input interface 102 may be included in the same configuration, and output of a screen and reception of an operation from the user may be performed in the same configuration.

The CPU 103 is a system control unit and controls the entire terminal apparatus 101.

The ROM 104 stores fixed data such as a control program to be executed by the CPU 103, a data table, and an operating system (hereinafter referred to as an OS) program. In the present embodiment, control programs stored in the ROM 104 perform software execution control such as scheduling, task switching, and interruption processing under management by the embedded OS stored in the ROM 104. In the present embodiment, the ROM 104 stores a setup application program (hereinafter referred to as a setup application). The setup application is installed in the terminal apparatus 101 from an external by, for example, a store application program. The setup application is an application provided by a vendor of the communication apparatus 151. The setup application may have other functions other than a function of performing a network setup for the communication apparatus 151. Specifically, for example, the other functions are a function of performing a setup other than the network setup for the communication apparatus 151, a function of transmitting a print job for causing the communication apparatus 151 to perform printing, and a function of transmitting a scan job for causing the communication apparatus 151 to perform scanning.

The RAM 105 includes a static random access memory (SRAM) that requires a backup power source. Since data is held in a primary battery (not illustrated) for data backup, important data such as a program control variable can be stored in the RAM 105 without being volatile. In addition, a memory area for storing setting information of the terminal apparatus 101, management data of the terminal apparatus 101, and the like is provided in the RAM 105. The RAM 105 is also used as a main memory and a work memory of the CPU 103.

The external storage 106 includes various programs including a print information generation program for generating print information interpretable by the communication apparatus 151 and an information transmission and reception control program for transmitting and receiving information to and from the communication apparatus 151 connected to the terminal apparatus 101 via the wireless communication unit 109. The external storage 106 stores various types of information that is used by these programs. The external storage 106 also stores image data acquired from another information processing apparatus and the Internet.

The output interface 107 controls displaying of data by the display unit 108 and notification of the state of the terminal apparatus 101 by the display unit 108.

The display unit 108 includes a light emitting diode (LED) and a liquid crystal display (LCD). The display unit 108 displays data and notifies the state of the terminal apparatus 101. A software keyboard that includes keys including a numeral input key, a mode setting key, a determination key, a cancel key, and a power supply key may be provided on the display unit 108, and the terminal apparatus 101 may receive input from the user via the display unit 108.

The communication unit 109 is wirelessly connected to apparatuses such as the communication apparatus 151 and the AP 131 and is configured to perform data communication with the apparatuses such as the communication apparatus 151 and the AP 131. For example, the communication unit 109 may wirelessly directly communicate with the communication apparatus 151 or may communicate with the communication apparatus 151 via the AP 131 present outside the terminal apparatus 101 and the communication apparatus 151. In the present embodiment, it is assumed that, as a wireless communication method of the wireless communication unit 109, Wi-Fi that is a communication method based on the IEEE802.11 series of standards is used, but Bluetooth Classic or the like may be used. In addition, in the present embodiment, it is assumed that a wireless LAN is a network by Wi-Fi. An example of the AP 131 is a device such as a wireless LAN router. In the present embodiment, a method in which the terminal apparatus 101 and the communication apparatus 151 are directly connected to each other without an external AP is referred to as a direct connection method. In the present embodiment, a method in which the terminal apparatus 101 and the communication apparatus 151 are connected to each other via an external AP is referred to as an infrastructure connection method.

The short-range wireless communication unit 110 performs data communication with an apparatus such as the communication apparatus 151 using a short-range wireless communication method and performs the communication using the communication method different from that of the wireless communication unit 109. The short-range wireless communication unit 110 can be connected to a short-range wireless communication unit 157 within the communication apparatus 151. Examples of the communication method of the short-range wireless communication unit 110 are BLE, Bluetooth Classic, Wi-Fi Aware, and NFC.

The image capturing device 111 converts an image captured by an image capturing element into digital data.

The digital data is temporarily stored in the RAM 105. Thereafter, a program executed by the CPU 103 converts the digital data into data in a predetermined image format and stores the converted data as image data to the external storage 106.

The wired communication unit 112 is connected to apparatuses such as the communication apparatus 151 and the AP 131 via a cable or the like and performs data communication with the apparatuses such as the communication apparatus 151 and the AP 131 via the cable or the like. For example, the wired communication unit 112 performs the communication by a wired LAN. In the present embodiment, it is assumed that, in the wired LAN, the communication is performed in accordance with an Ethernet standard. The wired communication unit 112 is not limited thereto. For example, the wired communication unit 112 may perform communication via a Universal Serial Bus (USB) cable.

The communication apparatus 151 includes a ROM 152, a RAM 153, a CPU 154, a print engine 155, a wireless communication unit 156, the short-range wireless communication unit 157, an input interface 158, an output interface 159, a function control unit 160, a display unit 161, a wired communication unit 162, and the like.

The ROM 152, the RAM 153, the CPU 154, and the like form a computer of the communication apparatus 151.

The wireless communication unit 156 is wirelessly connected to apparatuses such as the terminal apparatus 101 and the AP 131 and performs data communication with the apparatuses such as the terminal apparatus 101 and the AP 131. In the present embodiment, it is assumed that Wi-Fi is used as a wireless communication method of the wireless communication unit 156. However, Bluetooth Classic or the like may be used as the wireless communication method of the wireless communication unit 156. The wireless communication unit 156 includes, as an AP within the communication apparatus 151, an AP 156-a for connection to an apparatus such as the terminal apparatus 101. The AP 156-a can be connected to the wireless communication unit 109 of the terminal apparatus 101. The wireless communication unit 156 may directly communicate with the terminal apparatus 101 via the AP 156-a or may communicate with the terminal apparatus 101 via the AP 131. The AP 156-a may be hardware that functions as the AP. Alternatively, the wireless communication unit 156 may operate as the AP 156-a by software for functioning as the AP. In addition, the AP within the communication apparatus 151 may include a plurality of APs having different service set identifiers (SSIDs) and different passwords. In the present embodiment, it is assumed that the AP within the communication apparatus 151 includes at least a connection setting AP described later.

The RAM 153 includes a DRAM or the like that requires a backup power source. Data is held in the RAM 153 by supply of electric power (not illustrated) for data backup. Therefore, important data such as a program control variable can be stored in the RAM 153 without being volatile. In addition, the RAM 153 is used as a main memory and a work memory of the CPU 154 and stores various types of information as a receiving buffer for temporarily storing print information received from the terminal apparatus 101 or the like.

The ROM 152 stores fixed data such as a control program to be executed by the CPU 154, a data table, and an OS program. In the present embodiment, control programs stored in the ROM 152 perform software execution control such as scheduling, task switching, and interruption processing under management by the embedded OS stored in the ROM 152. In addition, the ROM 152 includes a memory area for storing data that is setting information of the communication apparatus 151, management data of the communication apparatus 151, and the like and is required to be held even in a case that electric power is not supplied.

The CPU 154 is a system control unit and controls the entire communication apparatus 151.

The print engine 155 uses a recording material such as ink to form an image on a recording medium such as paper and outputs a print result based on information stored in the RAM 153 and a print job received from the terminal apparatus 101 or the like. In this case, the print job transmitted from the terminal apparatus 101 or the like has a large amount of transmission data, high-speed communication is required, and thus the print job is received via the communication unit 156 that can perform communication at higher speed than the short-range wireless communication unit 157.

The short-range wireless communication unit 157 communicates with an apparatus such as the terminal apparatus 101 using a short-range wireless communication method. Examples of the communication method of the short-range wireless communication unit 157 are BLE, Bluetooth Classic, and Wi-Fi Aware.

The input interface 158 receives data input and an operation instruction from the user and includes a physical keyboard, buttons, a touch panel, and the like. The output interface 159 described later and the input interface 158 may be included in the same configuration, and output of a screen and reception of an operation from the user may be performed in the same configuration. The output interface 159 controls displaying of data by the display unit 161 and notification of the state of the communication apparatus 151 by the display unit 161.

The function control unit 160 manages a function operation of determining whether functions included in the communication apparatus 151 are to be concurrently operated.

The display unit 161 includes a light emitting diode (LED) and a liquid crystal display (LCD). The display unit 161 displays data and notifies the state of the communication apparatus 151. A software keyboard that includes keys including a numeral input key, a mode setting key, a determination key, a cancel key, and a power supply key may be provided on the display unit 161, and the communication apparatus 151 may receive input from the user via the display unit 161.

The wired communication unit 162 is connected to apparatuses such as the terminal apparatus 101 and the AP 131 via a cable or the like and perform data communication with the apparatuses such as the terminal apparatus 101 and the AP 131 via the cable or the like. For example, the wired communication unit 162 performs the communication by a wired LAN. The wired communication unit 162 is not limited thereto and may perform the communication via, for example, a USB cable. Regarding Direct Connection Method

The direct connection indicates a connection via which the apparatuses are directly wirelessly connected to each other (that is, in a peer-to-peer fashion) without an external apparatus such as the AP 131. The direct connection is also referred to as a peer-to-peer connection (P2P connection). The communication apparatus 151 can operate in a mode (direct connection mode) for communication via the direct connection. In Wi-Fi communication, a plurality of modes for communication via the direct connection, such as a software AP mode and a Wi-Fi Direct (WFD) mode, are present.

The WFD mode is a mode in which the direct connection is performed using WFD. WFD is a standard defined by Wi-Fi Alliance and is included in the IEEE802.11 series of standards. In the WFD mode, after an apparatus as a communication partner is found using an apparatus search command, roles of a P2P group owner (GO) and a P2P client are determined and remaining wireless connection processing is performed. The group owner corresponds to a Wi-Fi master station (parent station), and the client corresponds to a Wi-Fi slave station (child station). The determination of the roles corresponds to P2P GO negotiation. In the WFD mode, before the determination of the roles, the communication apparatus 151 is neither a master station nor a slave station. Specifically, first, one of the apparatuses that will communicate with each other issues an apparatus search command to search for the other apparatus to be connected in the WFD mode. In a case that the other apparatus as a communication partner is found, both the apparatuses check information regarding a service and a function that can be supplied by the apparatuses. The checking of the information to be supplied by the apparatuses is optional and is not necessarily essential. The phase of checking the information to be supplied by the apparatuses corresponds to, for example, P2P provision discovery. Next, after the checking of the information to be supplied by the apparatuses, a P2P client out of the apparatuses and a P2P group owner out of the apparatuses are determined as the roles. After the client and the group owner are determined, parameters for performing communication via WFD are exchanged between the apparatuses. Based on the exchanged parameters, the P2P client and the P2P group owner perform remaining wireless connection processing and IP connection processing. In the WFD mode, the communication apparatus 151 may necessarily operate as the GO without performing the above-described GO negotiation. That is, the communication apparatus 151 may operate in the WFD mode that is an autonomous GO mode. In addition, a state in which the communication apparatus 151 operates in the WFD mode is, for example, a state in which a connection via WFD is not established but the communication apparatus 151 operates as the GO or a state in which a connection via WFD is established and the communication apparatus 151 operates as the GO.

In the software AP mode, one (e.g., the terminal apparatus 101) of apparatuses (e.g., the terminal apparatus 101 and the communication apparatus 151) that communicate with each other serves as a client that plays a role of requesting various services. The other of the apparatuses implements a function of an AP for Wi-Fi by setting software. The software AP corresponds to a Wi-Fi master station, and the client corresponds to a Wi-Fi slave station. In the software AP mode, the client searches for the apparatus serving as the software AP using an apparatus search command. In a case that the software AP is found, the client and the software AP perform remaining wireless connection processing (establishment of a wireless connection and the like). Thereafter, the client and the software AP perform IP connection processing (assignment of an IP address and the like). A command and a parameter that are transmitted and received to implement a wireless connection between the client and the software AP may be defined in the Wi-Fi standards and will not be described.

In the present embodiment, in a case where the communication apparatus 151 establishes and maintains the direct connection, the communication apparatus 151 operates as a master station in a network to which the communication apparatus 151 belongs. The master station is an apparatus that builds a wireless network and provides, to a slave station, a parameter to be used for connection to the wireless network. The parameter to be used for connection to the wireless network is a parameter regarding a channel used by the master station. The slave station receives the parameter and uses the channel used by the master station to connect to the wireless network built by the master station. In the direct connection mode, since the communication apparatus 151 operates as the master station, the communication apparatus 151 can determine which frequency band to use for communication in the direct connection mode, and determine which channel to use for communication in the direct connection mode. In the present embodiment, it is assumed that a channel for the 2.4 GHz frequency band and a channel for the 5 GHz frequency band are available for use by the communication apparatus 151 in communication in the direct connection mode. It is assumed that the user can arbitrarily make a setting on a predetermined screen (not illustrated) displayed by the communication apparatus 151 to set a frequency band to be used (that is, to set a channel for the frequency band to be used). That is, in a case that the 2.4 GHz frequency band is selected on the predetermined screen, the communication apparatus 151 uses a channel for the 2.4 GHz frequency band for communication in the direct connection mode. In a case that the 5 GHz frequency band is selected on the predetermined screen, the communication apparatus 151 uses a channel for the 5 GHz frequency band for communication in the direct connection mode. However, in the present embodiment, it is assumed that even when the 5 GHz frequency band is selected on the predetermined screen, the communication apparatus 151 does not use a channel for a dynamic frequency selection (DFS) band included in the 5 GHz frequency band for communication in the direct connection mode. In other words, it is assumed that the communication apparatus 151 uses only a channel for a frequency band other than the DFS band included in the 5 GHz frequency band for communication in the direct connection mode. In a case that a radar wave in the DFS frequency band corresponding to a channel for the DFS frequency band is detected in a state in which the channel for the DFS frequency band is used, it is necessary to switch the channel currently used. The DFS band is a frequency band for which a channel may be switched due to the detection of a radar wave. For example, in a case where a wireless chip supporting a DFS function is used or the like, a channel for the dynamic frequency selection (DFS) band included in the 5 GHz frequency band may be usable for communication in the direct connection mode. A channel determined as a channel to be used in the direct connection mode is used for communication via the direct connection. The channel is also used for transmission of a beacon signal as the master station, transmission of a response to a received command, and the like. That is, the channel is used for not only communication processing in the direct connection mode in a state in which the direct connection is established but also communication processing in the direct connection mode in a state in which the direct connection is not established.

Although the user can set whether the channel for the 2.4 GHz frequency band is used or the channel for the 5 GHz frequency band is used, the present embodiment is not limited thereto. The communication apparatus 151 may receive designation of a channel number from the user, and the user may be able to set a channel number of a channel to be used in the direct connection mode. In addition, a channel to be used in the direct connection mode may not be arbitrarily set by the user and may be set in the communication apparatus 151 in advance.

Although the 2.4 GHz frequency band and the 5 GHz frequency band are available for use by the communication apparatus 151, the communication apparatus 151 is not limited thereto and may be able to use another frequency band. In the present embodiment, in processing for which the 2.4 GHz frequency band and the 5 GHz frequency band are used, another frequency band may be used. For example, since the 60 GHz frequency band is available in the IEEE802.11ad, the 60 GHz frequency band may be used as the other frequency band.

### Regarding Infrastructure Connection Method

In the infrastructure connection, apparatuses (e.g., the terminal apparatus 101 and the communication apparatus 151) that communicate with each other are connected to an AP (e.g., the AP 131) that controls a network to which the apparatuses belong, and communicate with each other via the AP. The communication apparatus 151 can operate in the mode (infrastructure connection mode) for communication via the infrastructure connection as one of connection modes.

In the infrastructure connection, each of the apparatuses searches for the AP using an apparatus search command. In a case that the AP is found, the apparatuses and the AP perform remaining wireless connection processing (establishment of a wireless connection and the like). Thereafter, the apparatuses and the AP perform IP connection processing (assignment of an IP address and the like). A command and a parameter that are transmitted and received to implement the wireless connection between the apparatuses and the AP may be defined in the Wi-Fi standards and will not be described.

In the present embodiment, in a case that the communication apparatus 151 operates in a state in which the communication apparatus 151 establishes the infrastructure connection, the AP 131 operates as a master station and the communication apparatus 151 operates as a slave station. That is, in the present embodiment, the infrastructure connection indicates a connection between the communication apparatus 151 operating as the slave station and the apparatus operating as the master station. In a case that the communication apparatus 151 establishes the infrastructure connection and the terminal apparatus 101 establishes an infrastructure connection to the AP 131, the communication apparatus 151 and the terminal apparatus 101 can communicate with each other via the AP 131. Since a channel used for communication via the infrastructure connection is determined by the AP 131, the communication apparatus 151 uses the channel determined by the AP 131 to perform communication via the infrastructure connection. In the present embodiment, it is assumed that a channel for the 2.4 GHz frequency band and a channel for the 5 GHz frequency band are available for use by the communication apparatus 151 in the communication via the infrastructure connection. A channel for the DFS band included in the 5 GHz frequency band is also available for use by the communication apparatus 151 in the communication via the infrastructure connection. To communicate with the communication apparatus 151 via the AP 131, the terminal apparatus 101 needs to recognize that the communication apparatus 151 belongs to the network that is formed by the AP 131 and to which the terminal apparatus 101 belongs.

### Regarding Connection Setting Mode

The communication apparatus 151 can operate in a connection setting mode. For example, a trigger for the communication apparatus 151 to start operating in the connection setting mode may be pressing of a connection setting mode button by the user or may be the first activation (power on) of the communication apparatus after arrival of the communication apparatus 151. The connection setting mode button may be a hardware button included in the communication apparatus 151 or may be a software button displayed on the display unit 161 by the communication apparatus 151.

Upon starting operating in the connection setting mode, the communication apparatus 151 enables Wi-Fi communication and BLE communication. Specifically, as processing of enabling the Wi-Fi communication, the communication apparatus 151 enables the AP (connection setting AP) included in the communication apparatus 151 and dedicated for the connection setting mode. Therefore, the communication apparatus 151 can establish the direct connection to the terminal apparatus 101 by Wi-Fi. It is assumed that connection information (an SSID and a password) for connection to the connection setting AP is held in the setup application installed in the terminal apparatus 101 and that the terminal apparatus 101 recognizes the connection information for connection to the connection setting AP in advance. An encryption method may not be set in the connection setting AP and a password may not be necessary for connection to the connection setting AP. Therefore, it is assumed that the connection information for connection to the connection setting AP cannot be arbitrarily changed by the user, unlike connection information of an AP enabled in the direct connection mode. In the connection setting mode, the communication apparatus 151 may be connected to the terminal apparatus 101 by Wi-Fi Direct (WFD) instead of normal Wi-Fi. That is, the communication apparatus 151 may operate as a group owner and receive a setting command from the terminal apparatus 101 via communication by WFD.

### Regarding Wireless Profile

A wireless profile is information stored and managed by the OS of the terminal apparatus 101 and including connection information of an AP to which the terminal apparatus 101 was previously connected. The wireless profile is used for, for example, a reconnection function that is a function of causing, in a case that a connection between the terminal apparatus 101 and an AP is disconnected, the OS of the terminal apparatus 101 to automatically re-establish the connection.

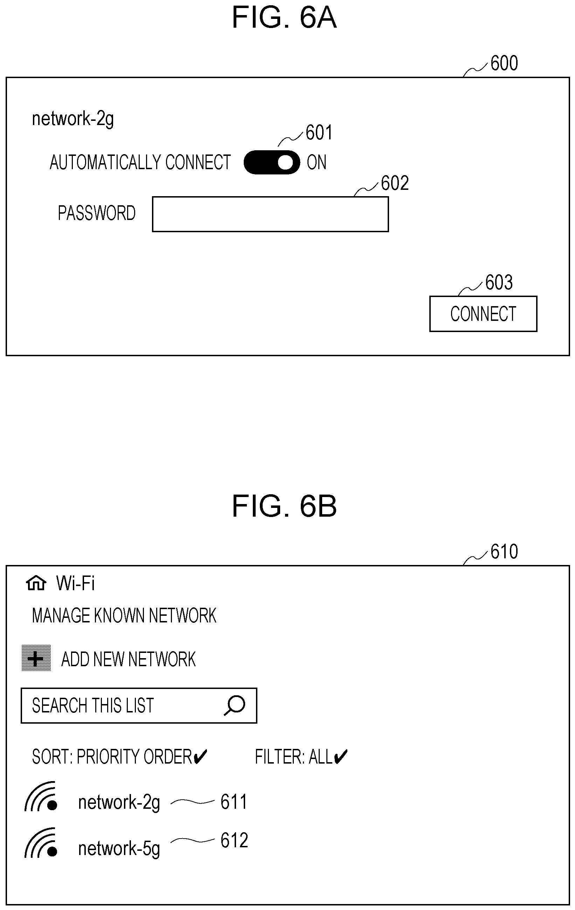

FIG. 6A illustrates a connection screen 600 displayed by the OS for connection of the terminal apparatus 101 to an AP. It is assumed that the connection screen 600 is a screen for connection to the AP 131 having an SSID displayed on the screen 600. The connection screen 600 includes a region 601 for setting whether to enable the reconnection function for connection to the AP 131, a region 602 for receiving an entry of a password for connection to the AP 131, and a region 603 for attempting to establish a connection between the AP 131 and the terminal apparatus 101 using the entered password. In a case where the reconnection function is set to be enabled in the region 601, and the connection between the terminal apparatus 101 and the AP 131 is disconnected, the OS automatically re-establish the connection. On the other hand, in a case where the reconnection function is set to be disabled in the region 601, and the connection between the terminal apparatus 101 and the AP 131 is disconnected, the OS does not automatically re-establish the connection. In a case that the region 603 is pressed and the connection between the AP 131 and the terminal apparatus 101 is successfully established, the OS stores the connection information (the SSID and the password) of the AP 131 as the wireless profile. However, it is assumed that, in a state in which the reconnection function is set to be disabled, even in a case that the connection between the AP 131 and the terminal apparatus 101 is successfully established, an OS of a specific type or an OS of a specific version does not store the connection information of the AP 131 as the wireless profile.

FIG. 6B illustrates a wireless profile screen 610 displayed by the OS and indicating a wireless profile stored. The wireless profile screen 610 is an example of a screen in a case where the OS stores two wireless profiles. On the wireless profile screen 610, a wireless profile having a higher priority is displayed on the upper side. The wireless profile having the higher priority is more preferentially used in a state in which a connection between the terminal apparatus 101 and an AP is not established. In a region 611, the first wireless profile having the higher priority is indicated by an SSID. In a region 612, the second wireless profile having a lower priority is indicated by an SSID. In a case that a predetermined operation is performed on the region 611 or the region 612, the wireless profile corresponding to the region on which the predetermined operation has been performed can be deleted from the terminal apparatus 101.

### Regarding Process Performed by Terminal Apparatus 101 and Communication Apparatus 151

In the present embodiment, the setup application can perform a network setup (hereinafter referred to as a first setup) for the communication apparatus 151 via a wireless connection between the terminal apparatus 101 and the communication apparatus 151 operating in the connection setting mode. The first setup is, in other words, a setup method of connecting the communication apparatus 151 and an AP to each other by transmitting setting information by the setup application from the terminal apparatus 101 to the communication apparatus 151 via wireless communication. The setting information includes a password for connection to the AP.

For example, in a case where different APs are present in a single house, a single wireless LAN router enables different APs that use different frequency bands, or the like, the same password may be used by the different APs. That is, for example, even in a case where an AP to which the terminal apparatus 101 is connected at the start time of the first setup is different from an AP corresponding to setting information transmitted by the first setup to the communication apparatus 151, the same password may be used by the APs. The different APs are, in other words, a plurality of APs having different SSIDs. The setup application can acquire, from a wireless profile managed by the OS of the terminal apparatus 101, a password of an AP to which the terminal apparatus 101 was previously connected, without receiving an entry of the password on the setup application from the user. That is, in a case where the AP to which the terminal apparatus 101 is connected at the start time of the first setup is different from the AP corresponding to the setting information transmitted by the first setup to the communication apparatus 151, and the same password is used by the APs, a password acquired from the wireless profile is available as the setting information without reception of an entry of the password on the setup application from the user. However, in a conventional technique, in a case where an AP to which a terminal apparatus 101 is connected at the start time of a first setup is different from an AP corresponding to setting information transmitted by the first setup to a communication apparatus 151, a setup application transmits, as setting information, a password entered on the setup application from a user. That is, in the conventional technique, it is necessary that the user enter the password on the setup application and the usability in transmitting the setting information is low.

In the present embodiment, even in a case where the AP to which the terminal apparatus 101 is connected at the start time of the first setup is different from the AP corresponding to the setting information transmitted by the first setup to the communication apparatus 151, the terminal apparatus 101 transmits the password acquired from the wireless profile as the setting information to the communication apparatus 151 without receiving an entry of the password on the setup application from the user.

As described above, the setup application can acquire, from the wireless profile managed by the OS of the terminal apparatus, a password of an AP to which the terminal apparatus 101 was previously connected without receiving an entry of the password on the setup application from the user. That is, in a case where the password acquired from the wireless profile can be transmitted as the setting information to the communication apparatus 151, processing of receiving an entry of the password on the setup application from the user can be omitted and the usability is improved. However, a password that can be acquired from the wireless profile may not be available for connection to an AP specified as a connection partner of the communication apparatus 151. Specifically, a case where the password that can be acquired from the wireless profile may not be available is, for example, a case where an AP to which the terminal apparatus 101 is connected at the start time of the first setup is different from an AP corresponding to the setting information transmitted by the first setup to the communication apparatus 151 and different passwords are used by the APs. In addition, there is a problem that, in a case that the password that is not available for connection to the AP specified as the connection partner of the communication apparatus 151 is transmitted to the communication apparatus 151, the communication apparatus 151 cannot establish a connection to the AP.

Therefore, in the present embodiment, in the terminal apparatus 101, the setup application determines whether the password acquired from the wireless profile is available for connection to the AP specified as the connection partner of the communication apparatus 151. In a case where the password acquired from the wireless profile is available for connection to the AP specified as the connection partner of the communication apparatus 151, the setup application performs the first setup without receiving an entry of the password on the setup application from the user, and thus the user's convenience is improved. On the other hand, in a case where the password acquired from the wireless profile is not available for connection to the AP specified as the connection partner of the communication apparatus 151, the setup application performs control to transmit another password to the communication apparatus 151.

The communication apparatus 151 may be able to be connected to the AP by a method other than the first setup. Second and third setups other than the first setup are network setups that are performed without transmitting setting information by the setup application from the terminal apparatus 101 to the communication apparatus 151 via wireless communication. Specifically, for example, the second setup is a network setup by Push-Button Wi-Fi Protected Setup. The second setup may be a network setup by PIN code WPS. The second setup may be a network setup other than AOSS and WPS such as Raku Wireless Start. The second setup may be a network setup that is performed in a case that a connection is established by a wireless LAN between the communication apparatus 151 and an AP selected by an operation performed by the user on the communication apparatus 151 among APs found by the communication apparatus 151.

The third setup that is a method other than the first setup is a network setup that is performed in a case that a connection is established between an AP and the communication apparatus 151 by a wired LAN. The third setup may be a network setup that is performed in a case that a connection is established between the terminal apparatus 101 and the communication apparatus 151 by USB. The second setup and the third set up are setup methods that can be performed without an entry of a password for connection to an AP by the user.

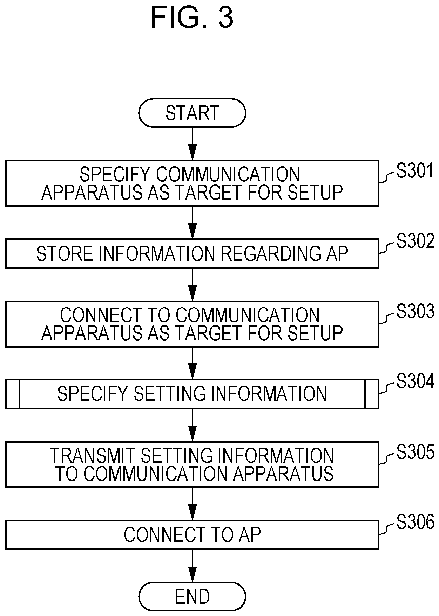

FIG. 3 is a flowchart illustrating a network setup for the communication apparatus 151 that is performed by the terminal apparatus 101. This flowchart is implemented by the CPU 103 reading a program stored in the ROM 104 into the RAM 105 and executing the program. In the present embodiment, it is assumed that the terminal apparatus 101 performs a process by the setup application. In addition, it is assumed that the flowchart is started based on a predetermined instruction given by the user on a screen displayed by the setup application.

In S301, the CPU 103 specifies the communication apparatus 151 as a target for a setup by the first setup. Specifically, for example, the CPU 103 detects a beacon issued by the communication apparatus 151 operating in the connection setting mode. In the present embodiment, it is assumed that the setup application recognizes, in advance, the SSID of the communication apparatus 151 operating in the connection setting mode. Therefore, the CPU 103 detects a beacon including the SSID as the beacon issued by the communication apparatus 151 operating in the connection setting mode. The CPU 103 specifies, as the target for the setup, the communication apparatus 151 issuing the detected beacon.

In a case that a plurality of communication apparatuses 151 operating in the connection setting mode are present around the terminal apparatus 101, and a plurality of beacons are detected by the CPU 103, the CPU 103 may display a list of the plurality of communication apparatuses 151 operating in the connection setting mode and specify a communication apparatus 151 selected from the list as the target for the setup. Alternatively, the CPU 103 may specify, as the target for the setup, a communication apparatus 151 issuing a beacon detected earliest among the plurality of beacons detected.

In S302, the CPU 103 acquires information regarding the AP 131 to which the terminal apparatus 101 is currently connected, and stores the acquired information to a memory such as the RAM 105. Specifically, first, the CPU 103 executes an API for acquiring the SSID of the AP 131 to which the terminal apparatus 101 is currently connected, and acquires, by the setup application from the OS, the SSID of the AP 131 to which the terminal apparatus 101 is currently connected. Thereafter, the CPU 103 executes an API for acquiring a password from a wireless profile corresponding to the acquired SSID, and acquires, by the setup application from the OS, a password of the AP 131 to which the terminal apparatus 101 is currently connected. In this case, the password of the AP 131 is included in the wireless profile corresponding to the AP 131 to which the terminal apparatus 101 is currently connected. The wireless profile corresponding to the AP 131 to which the terminal apparatus 101 is currently connected is a wireless profile stored by the OS based on the connection of the terminal apparatus 101 to the AP 131. The AP 131 to which the terminal apparatus 101 is currently connected is, in other words, the AP 131 to which the terminal apparatus 101 is connected when a predetermined instruction is given by the user. The information regarding the AP 131 may include information indicating an encryption method that is used by the AP 131 and information indicating a frequency band and a channel that are used by the AP 131. In a case where the AP 131 to which the terminal apparatus 101 is currently connected is not present, this processing in S302 is omitted.

In S303, the CPU 103 disconnects a Wi-Fi connection between the AP 131 and the terminal apparatus 101 and establishes a Wi-Fi connection between the communication apparatus 151 specified in S301 and the terminal apparatus 101. In the present embodiment, it is assumed that the communication apparatus 151 operating in the connection setting mode is an apparatus to which the terminal apparatus 101 can connect without a password. For the connection to the communication apparatus 151 operating in the connection setting mode, a password may be required. In this mode, it is assumed that the setup application recognizes the password in advance.

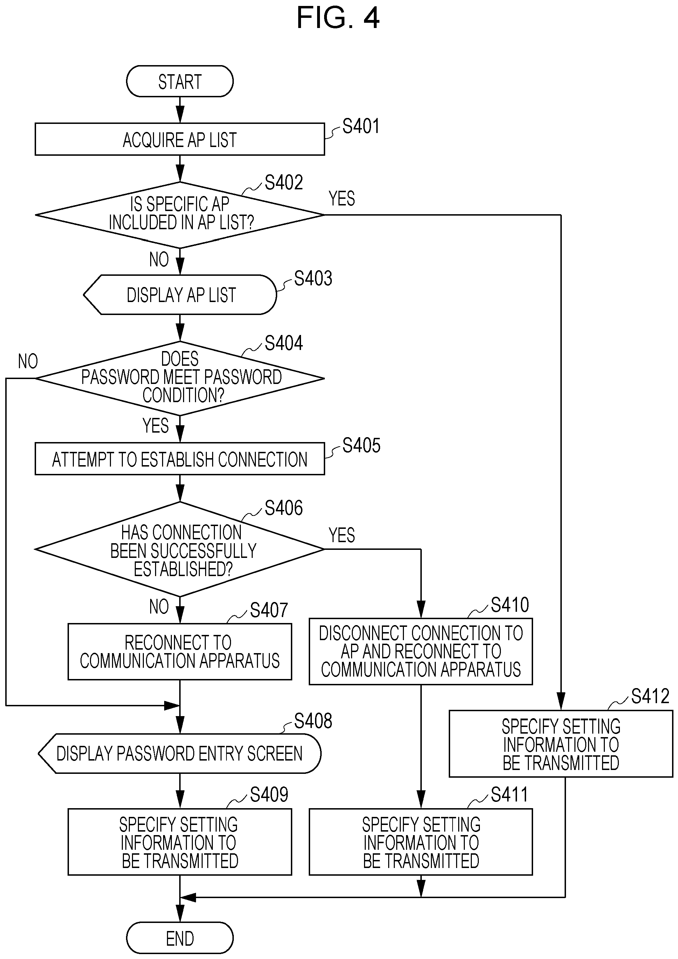

In S304, the CPU 103 executes processing of specifying setting information to be transmitted to the communication apparatus 151 specified in S301. This processing will be described in detail with reference to FIG. 4.

In S305, the CPU 103 transmits the setting information specified in S304 to the communication apparatus 151 specified in S301 via the Wi-Fi connection between the communication apparatus 151 specified in S301 and the terminal apparatus 101.

In S306, the CPU 103 disconnects the Wi-Fi connection between the communication apparatus 151 specified in S301 and the terminal apparatus 101 and re-establishes the Wi-Fi connection between the terminal apparatus 101 and the AP 131 that was previously connected in S302. It is assumed that the information stored in S302 is used for the establishment of the Wi-Fi connection. However, the present embodiment is not limited thereto. The information (password and the like) for the establishment of the Wi-Fi connection may be acquired from the wireless profile stored by the OS of the terminal apparatus 101 in S306. The AP 131 that was previously connected in S302 is the AP 131 to which the terminal apparatus 101 is connected when the predetermined instruction is given by the user, as described above.

FIG. 4 is a flowchart illustrating a network setup for the communication apparatus 151 that is performed by the terminal apparatus 101. This flowchart is implemented by the CPU 103 reading a program stored in the ROM 104 into the RAM 105 and executing the program. The process illustrated in this flowchart corresponds to the processing in S304.

In S401, the CPU 103 receives an AP list from the communication apparatus 151 specified in S301 via the Wi-Fi connection between the communication apparatus 151 specified in S301 and the terminal apparatus 101. The AP list is a list of one or more APs found in a search performed by the communication apparatus 151. That is, the AP list is a list of one or more APs to which the communication apparatus 151 can be connected. Specifically, for example, the AP list includes an SSID of each AP found in the search performed by the communication apparatus 151 and information of an encryption method used by each AP found in the search performed by the communication apparatus 151.

In S402, the CPU 103 determines whether the AP 131 that was previously connected in S302 is included in the one or more APs indicated in the AP list acquired in S401. In a case that the CPU 103 determines YES in S402, the process proceeds to S412. In a case that the CPU 103 determines NO in S402, the process proceeds to S403.

In S403, the CPU 103 displays the AP list acquired in S401 and receives selection of any one of the one or more APs indicated in the AP list.

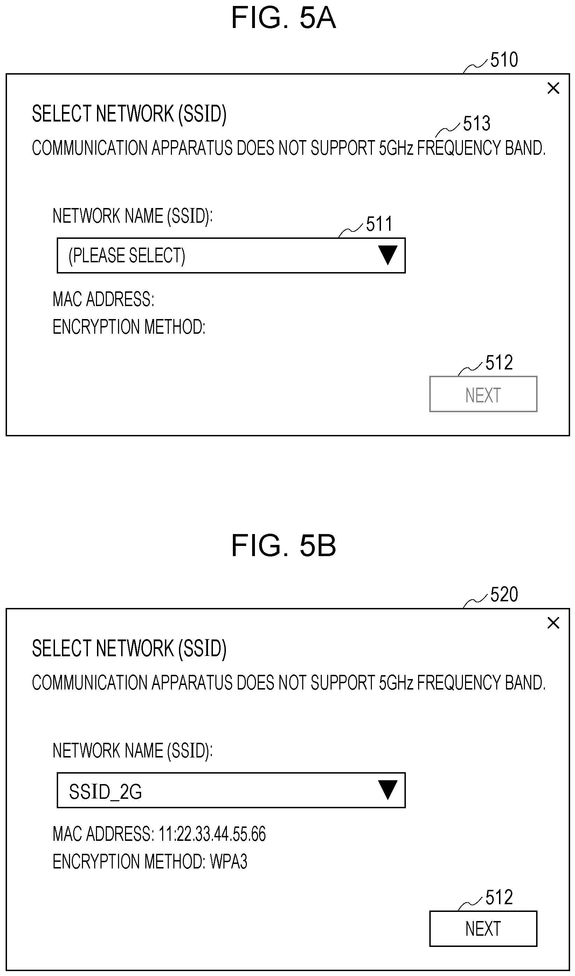

Specifically, for example, the CPU 103 displays a selection screen 510 illustrated in FIG. 5A. The selection screen 510 includes a pulldown menu 511 and a button 512. The selection screen 510 may include a message 513 indicating a reason that the AP 131 that was previously connected in S302 is not included in the one or more APs indicated in the AP list acquired in S401. For example, the reason is that the communication apparatus 151 does not support communication using the 5 GHz frequency band, an AP that uses the 5 GHz frequency band is not included in the AP list, and the AP 131 that was previously connected in S302 uses the 5 GHz frequency band. Therefore, the message 513 may indicate that the communication apparatus 151 does not support communication using the 5 GHz frequency band. The pulldown menu 511 is a menu for displaying the AP list acquired in S401 in a case that the pulldown menu 511 is operated by the user. After the user selects the pulldown menu 511, the user selects any AP from the AP list. The button 512 is not permitted to receive pressing by the user until the user selects any AP. Therefore, the button 512 may be grayed out until the user selects any AP. In a case that the user selects any AP, the SSID of the AP selected by the user is displayed on the pulldown menu 511 as in a selection screen 520 illustrated in FIG. 5B. Further, the selection screen 520 displays a MAC address of the AP selected by the user and an encryption method used by the AP selected by the user. Thereafter, in a case that the button 512 enabled by selection of any AP is pressed by the user, the process proceeds to S404.

In S404, the CPU 103 determines whether a password for connection to the AP 131 that was previously connected in S302 meets a password condition for an encryption method used by the AP selected in S403. The password for connection to an AP corresponding to the AP 131 that was previously connected in S302 is included in the information stored in S302. The password condition is a condition regarding a character string permitted as the password. Specifically, for example, the password condition is a condition regarding a type of a character, the number of characters, and the like. A password condition is uniquely defined for each encryption method. Specifically, for example, a password condition for WPA2-Personal is "8 to 63 half-width alphanumeric symbols or 64 characters in hexadecimal". Therefore, for example, in a case where the encryption method used by the AP selected in S403 is WPA2-Personal, the CPU 103 determines in this processing whether the password for connection to the AP 131 that was previously connected in S302 meets the condition that is "8 to 63 half-width alphanumeric symbols or 64 characters in hexadecimal". In a case that the CPU 103 determines YES in S404, the process proceeds to S405. In a case that the CPU 103 determines NO in S404, the process proceeds to S408. In a case that the CPU 103 determines NO in S404, processing of attempting to establish a connection in S405 is not executed.

In S404, instead of the above-described determination, the CPU 103 may determine whether the encryption method used by the AP selected in S403 matches the encryption method used by the AP 131 that was previously connected in S302. This is due to the fact that, in a case where the encryption methods match, the password for connection to the AP 131 that was previously connected in S302 necessarily meets the password condition for the encryption method used by the AP selected in S403, and that, in a case where the encryption methods do not match, the password for connection to the AP 131 that was previously connected in S302 may not meet the password condition for the encryption method used by the AP selected in S403.

In the present embodiment, the determination in S404 is executed and the process is branched based on the result of the determination in S404. However, the present embodiment is not limited thereto. In the present embodiment, the determination in S404 may not be executed. Specifically, for example, after any AP is selected in S403, the processing in S405 may be executed without executing the processing in S404.

In S405, the CPU 103 disconnects the connection between the communication apparatus 151 and the terminal apparatus 101. Then, the CPU 103 attempts to establish a connection between the AP selected in S403 and the terminal apparatus 101 using the password for connection to the AP 131 that was previously connected in S302. Since this processing in S405 is executed in a case that the CPU 103 determines NO in S402. In a state in which the processing in S405 is executed, the AP selected in S403 is different from the AP 131 that was previously connected in S302. Specifically, for example, the SSID of the AP selected in S403 is different from the SSID of the AP that was previously connected in S302. However, in the present embodiment, even though the AP selected in S403 is different from the AP 131 that was previously connected in S302, the CPU 103 attempts to establish the connection between the AP selected in S403 and the terminal apparatus 101 using the password for connection to the AP 131 that was previously connected in S302. This is due to the fact that even in a case where the AP selected in S403 is different from the AP 131 that was previously connected in S302, a password for connection to the AP selected in S403 may be the same as the password for connection to the AP 131 that was previously connected in S302.

In S406, the CPU 103 determines whether a connection between the AP selected in S403 and the terminal apparatus 101 has been successfully established as a result of attempting to establish the connection in S405. In a case that the CPU 103 determines YES in S406, the process proceeds to S410. In a case that the CPU 103 determines NO in S406, the process proceeds to S407.

In S407, the CPU 103 re-establishes a connection between the communication apparatus 151 and the terminal apparatus 101. The processing in S407 may be executed after processing in S408 and processing in S409.

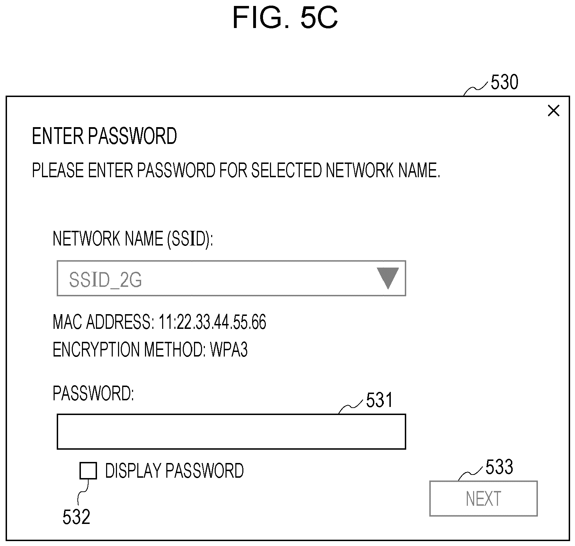

In S408, the CPU 103 displays a password entry screen for receiving an entry of the password for connection to the AP selected in S403 from the user. Then, the CPU 103 receives an entry of the password for connection to the AP selected in S403 from the user. As the password entry screen, for example, an entry screen 530 as illustrated in FIG. 5C is displayed. That is, the screen displayed by the terminal apparatus 101 is switched from the selection screen 520 illustrated in FIG. 5B to the entry screen 530. The entry screen 530 includes an entry box 531, a checkbox 532, and a button 533. The entry box 531 is a region for receiving an entry of a password from the user. The checkbox 532 is a region for switching between a display of the entered password and a display of a blank font such as an asterisk with which a part or all of the password is replaced. The button 533 is not permitted to receive pressing by the user until the password is entered by the user. Therefore, the button 533 may be grayed out until the password is entered by the user. In a case that the button 533 enabled by the entry of the password is pressed by the user, the process proceeds to the processing in S409.

The process may not proceed to the processing in S409 immediately after the processing in S408. Specifically, for example, the CPU 103 may disconnect the connection between the communication apparatus 151 and the terminal apparatus 101 after the processing in S408. Next, the CPU 103 may attempt to establish a connection between the AP selected in S403 and the terminal apparatus 101 using the password entered in S408. Then, the CPU 103 may determine, based on the attempt to establish the connection, whether the connection between the AP selected in S403 and the terminal apparatus 101 has been successfully established. In a case that the CPU 103 determines that the connection between the AP selected in S403 and the terminal apparatus 101 has been successfully established, the CPU 103 may re-establish a connection between the communication apparatus 151 and the terminal apparatus 101 and the process may proceed to S409. In a case that the CPU 103 determines that the connection between the AP selected in S403 and the terminal apparatus 101 has not been successfully established, an error screen may be displayed and the process may return to S408. In this mode, the processing in S407 that is executed before the processing in S408 may be skipped.

In S409, the CPU 103 specifies the SSID of the AP selected in S403 and the password entered by the user in S408 as setting information to be transmitted to the communication apparatus 151 specified in S301. In this case, the CPU 103 may specify other information such as a frequency band and the encryption method that are used by the AP selected in S403. Thereafter, the process illustrated in the flowchart of FIG. 4 ends and the process illustrated in FIG. 3 proceeds to S305.

In S410, the CPU 103 disconnects the connection between the AP selected in S403 and the terminal apparatus 101 and re-establishes a connection between the communication apparatus 151 and the terminal apparatus 101. The processing in S410 may be executed after processing in S411.

In S411, the CPU 103 specifies, as setting information to be transmitted to the communication apparatus 151 specified in S301, the SSID of the AP selected in S403 and the password for connection to the AP 131 that was previously connected in S302. Since the connection between the AP selected in S403 and the terminal apparatus 101 has been successfully established using the password for connection to the AP 131 that was previously connected in S302, the password for connection to the AP 131 that was previously connected in S302 is the password for connection to the AP selected in S403. In this case, the CPU 103 may specify other information such as the frequency band and the encryption method that are used by the AP selected in S403. Thereafter, the process illustrated in the flowchart of FIG. 4 ends and the process illustrated in FIG. 3 proceeds to S305.

In S412, the CPU 103 specifies, as the setting information to be transmitted to the communication apparatus 151 specified in S301, the SSID of the AP 131 that was previously connected in S302 and the password for connection to the AP 131 that was previously connected in S302. In S412, the CPU 103 may specify other information such as the frequency band and the encryption method that are used by the AP 131 that was previously connected in S302. The information specified in S412 is information included in the information stored in S302. Thereafter, the process illustrated in the flowchart of FIG. 4 ends and the process illustrated in FIG. 3 proceeds to S305.

In this mode, it is possible to improve the user's convenience regarding the setup process on the communication apparatus 151. Specifically, for example, in a specific case, it is possible to specify setting information to be transmitted to the communication apparatus 151 without receiving an entry of the password from the user.

The setting information to be transmitted to the communication apparatus 151 includes the SSID as information for specifying the AP. The present embodiment is not limited thereto. The information for specifying the AP may be, for example, identification information of the AP selected in S403 and may be information such as an IP address or a MAC address of the AP selected in S403.

As described above, the information for specifying the AP selected in S403 is transmitted in S305. However, the present embodiment is not limited thereto. The information for specifying the AP selected in S403 may be transmitted via the connection between the terminal apparatus 101 and the communication apparatus 151 before the CPU 103 attempts to establish the connection in S405. In S305 executed after the attempt to establish the connection is successful in S405, the information for specifying the AP selected in S403 may not be transmitted and only the password may be transmitted.

### Second Embodiment

In a second embodiment, a mode in which a password to be used to attempt to establish a connection is different from that in the first embodiment will be described.

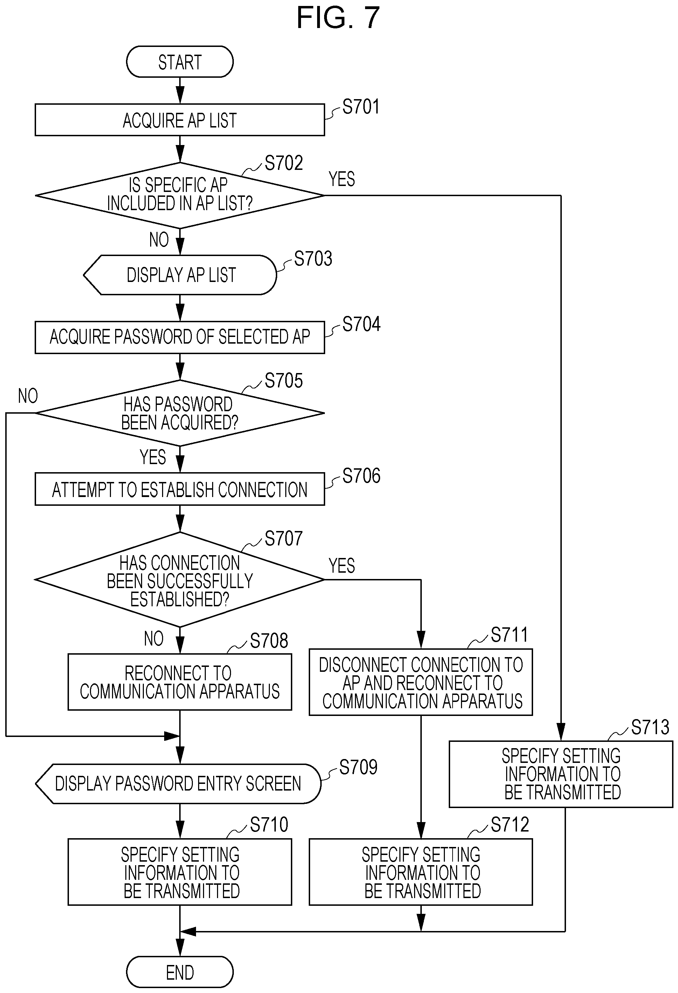

In the present embodiment, a communication system is similar to the communication system according to the first embodiment unless otherwise specified. Specifically, for example, in the process illustrated in FIG. 3 described in the first embodiment, processing similar to the processing described in the first embodiment is executed in the second embodiment. In the present embodiment, a process illustrated in FIG. 7 described below is performed instead of the process illustrated in FIG. 4 described in the first embodiment.

FIG. 7 is a flowchart illustrating a network setup for the communication apparatus 151 that is performed by the terminal apparatus 101. This flowchart is implemented by the CPU 103 reading a program stored in the ROM 104 into the RAM 105 and executing the program. The process illustrated in this flowchart corresponds to the processing in S304.

Processing in S701 to S703 is the same as or similar to the processing in S401 to S403, and thus will not be described below.

In S704, the CPU 103 attempts to acquire a password of an AP selected in S703 from a wireless profile stored by the OS of the terminal apparatus 101.

In S705, the CPU 103 determines whether the CPU 103 has acquired the password of the AP selected in S703 from the wireless profile stored by the OS of the terminal apparatus 101. In a case where the AP selected in S703 and the terminal apparatus 101 were connected to each other in the past, and the wireless profile corresponding to the AP selected in S703 has been stored by the OS of the terminal apparatus 101, the acquisition of the password of the AP selected in S703 is successful. On the other hand, in a case where the AP selected in S703 and the terminal apparatus 101 were not connected to each other in the past or in a case where the AP selected in S703 and the terminal apparatus 101 were connected to each other in the past but the wireless profile corresponding to the AP selected in S703 has been deleted, the acquisition of the password of the AP selected in S703 fails. In a case that the CPU 103 determines YES in S705, the process proceeds to step S706. In a case that the CPU 103 determines NO in S705, the process proceeds to step S709.

In S706, the CPU 103 disconnects a connection between the communication apparatus 151 and the terminal apparatus 101. Then, the CPU 103 attempts to establish a connection between the AP selected in S703 and the terminal apparatus 101 using the password acquired in S704.

Processing in S707 to S711 is the same as or similar to the processing in S406 to S410 and thus will not be described below. The process may not proceed to the processing in S710 immediately after the processing in S709. This mode is the same as or similar to the mode in which the process does not proceed to the processing in S409 immediately after the processing in S408.

In S712, the CPU 103 specifies, as setting information to be transmitted to the communication apparatus 151 specified in S301, the SSID of the AP selected in S703 and the password acquired in S704. In this case, the CPU 103 may specify other information such as a frequency band and an encryption method that are used by the AP selected in S703. After S712, the process illustrated in the flowchart of FIG. 7 ends and the process illustrated in FIG. 3 proceeds to step S305.

Processing in S713 is the same as or similar to the processing in S412 and thus will not be described below.

In this mode, it is possible to specify setting information without receiving an entry of the password on the setup application and improve the usability.

### Third Embodiment

In a third embodiment, a mode in which the features of the first embodiment and the features of the second embodiment are combined will be described.

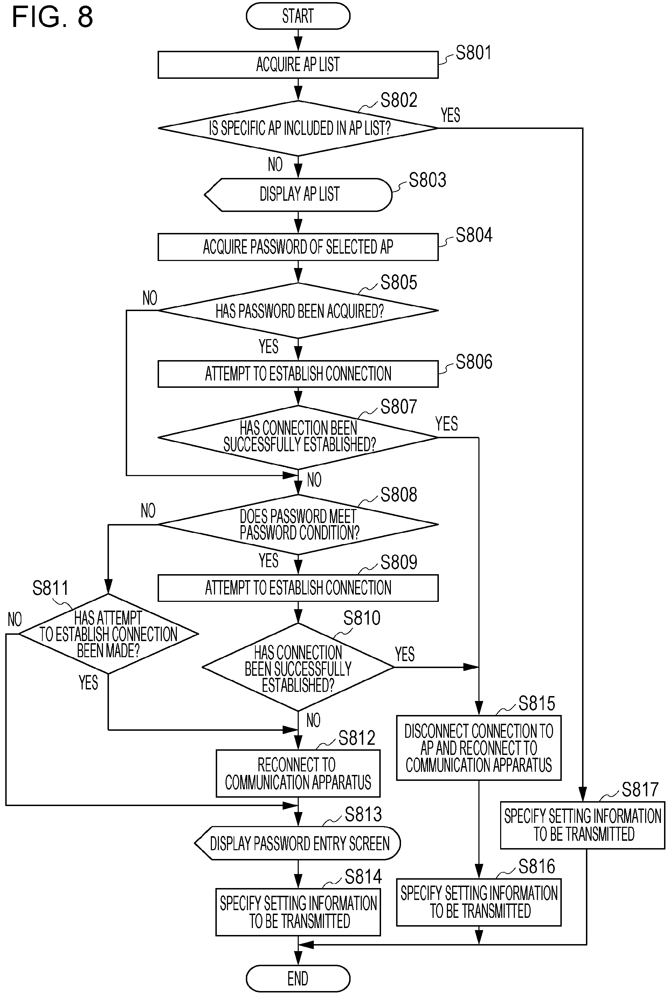

In the present embodiment, a communication system is similar to the communication system according to the first embodiment unless otherwise specified. Specifically, for example, in the process illustrated in FIG. 3 described in the first embodiment, processing similar to the processing described in the first embodiment is executed. In the present embodiment, a process illustrated in FIG. 8 described below is performed instead of the process illustrated in FIG. 4 described in the first embodiment.

Processing in step S801 to S804 is the same as or similar to the processing in S701 to S704 and will not be described.

In S805, the CPU 103 determines whether the CPU 103 has acquired a password of an AP selected in S803 from a wireless profiles stored by the OS of the terminal apparatus 101 in a similar manner to the processing in S705. In a case that the CPU 103 determines YES in S805, the process proceeds to S806. In a case that the CPU 103 determines NO in S805, the process proceeds to S808.

Processing in S806 is the same as or similar to the processing in S706 and will not be described below.

In S807, the CPU 103 determines whether a connection between the AP selected in S803 and the terminal apparatus 101 has been successfully established as a result of attempting to establish the connection in S806. In a case that the CPU 103 determines YES in S807, the process proceeds to S815. In a case that the CPU 103 determines NO in S807, the process proceeds to S808.

Processing in S808 to S810 is the same as or similar to the processing in S404 to S406 and will not be described below.

In S811, the CPU 103 determines whether an attempt to establish the connection has been made in S806. In a case where the attempt to establish the connection has been made in S806, the connection between the communication apparatus 151 and the terminal apparatus 101 has not been established. In this determination, the CPU 103 may determine whether the connection between the communication apparatus 151 and the terminal apparatus 101 has not been established. In a case that the CPU 103 determines YES in S811, the process proceeds to S812. In a case that the CPU 103 determines NO in S811, the process proceeds to S813.

Processing in S812 to S815 is the same as or similar to the processing in S407 to S410 and will not be described below. The process may not proceed to the processing in S814 immediately after the processing in S813. This mode is the same as or similar to the mode in which the process does not proceed to the processing in S409 immediately after the processing in S408.

In S816, the CPU 103 specifies the SSID of the AP selected in S803 as setting information to be transmitted to the communication apparatus 151 specified in S301. Next, in a case that the attempt to establish the connection in S806 has been successful, the CPU 103 specifies a password acquired in S804 as setting information to be transmitted to the communication apparatus 151 specified in S301. Then, in a case that an attempt to establish a connection in S809 has been successful, the CPU 103 specifies, as setting information to be transmitted to the communication apparatus 151 specified in S301, a password for connection to the AP 131 that was previously connected in S302.

Processing in S817 is the same as or similar to the processing in S412 and will not be described below.

In the above-described mode, it is possible to specify setting information without receiving an entry of the password on the setup application and improve the usability.

### Other Embodiments

In the above description, in the first setup, the terminal apparatus 101 uses the wireless communication unit 109 (that is, uses Wi-Fi) to transmit setting information to the communication apparatus 151. However, the terminal apparatus 101 is not limited thereto. The terminal apparatus 101 may use the short-range wireless communication unit 110 to transmit the setting information to the communication apparatus 151. That is, the setting information may be transmitted via a wireless connection by BLE, Bluetooth, or the like between the terminal apparatus 101 and the communication apparatus 151. In this mode, it is not necessary to disconnect the Wi-Fi connection between the terminal apparatus 101 and the AP in S303 and re-establish the Wi-Fi connection between the terminal apparatus 101 and the AP in S306. That is, while the Wi-Fi connection between the terminal apparatus 101 and the AP is maintained, the terminal apparatus 101 may use the short-range wireless communication unit 110 to transmit the setting information to the communication apparatus 151. In this mode, it is not necessary to disconnect the connection between the terminal apparatus 101 and the communication apparatus 151 in S405 and re-establish the connection between the terminal apparatus 101 and the communication apparatus 151 in S407 and S408. That is, while the wireless connection by BLE, Bluetooth, or the like between the terminal apparatus 101 and the communication apparatus 151 is maintained, an attempt to establish a connection between the terminal apparatus 101 and an AP may be made.

In the above description, in a case that the CPU 103 determines NO in S404, the process immediately proceeds to S408. The CPU 103 is not limited thereto. For example, in a case that the CPU 103 determines NO in S404, the CPU 103 may determine whether a wireless profile corresponding to the AP selected in S403 has been stored by the OS of the terminal apparatus 101. In a case that the CPU 103 determines that the wireless profile corresponding to the AP selected in S403 has been stored by the OS of the terminal apparatus 101, the CPU 103 may acquire a password for connection to the AP selected in S403 from the wireless profile corresponding to the AP selected in S403. Next, the CPU 103 may disconnect the connection between the communication apparatus 151 and the terminal apparatus 101 and attempt to establish a connection between the AP selected in S403 and the terminal apparatus 101 using the password acquired from the wireless profile in the above-described manner. Then, the CPU 103 determines whether the connection between the AP selected in S403 and the terminal apparatus 101 has been successfully established as a result of attempting to establish the connection. In a case that the CPU 103 determines that the connection between the AP selected in S403 and the terminal apparatus 101 has been successfully established, the process may proceed to S410. In a case that the CPU 103 determines that the connection between the AP selected in S403 and the terminal apparatus 101 has not been successfully established, the process may proceed to S407. In this mode, before S404, the CPU 101 may determine whether the wireless profile corresponding to the AP selected in S403 has been stored by the OS of the terminal apparatus 101.

In the above description, in a case that the result of the determination in S406 is NO, the process immediately proceeds to S407. However, the CPU 103 is not limited thereto. For example, in a case that the result of the determination in S406 is NO, the CPU 103 may determine whether the wireless profile corresponding to the AP selected in S403 has been stored by the OS of the terminal apparatus 101. The wireless profile corresponding to the AP selected in S403 is a wireless profile stored by the OS based on a connection between the AP selected in S403 and the terminal apparatus 101 in a case where the connection between the AP selected in S403 and the terminal apparatus 101 was established in the past. That is, the determination as to whether the wireless profile corresponding to the AP selected in S403 has been stored by the OS of the terminal apparatus 101 corresponds to a determination as to whether the AP selected in S403 and the terminal apparatus 101 were connected to each other in the past. In a case that the CPU 103 determines that the wireless profile corresponding to the AP selected in S403 has been stored by the OS of the terminal apparatus 101, the CPU 103 may acquire a password for connection to the AP selected in S403 from the wireless profile corresponding to the AP selected in S403. Next, the CPU 103 may attempt to establish a connection between the AP selected in S403 and the terminal apparatus 101 using the password acquired from the wireless profile in the above-described manner. Then, the CPU 103 may determine whether the connection between the AP selected in S403 and the terminal apparatus 101 has been successfully established. In a case that the CPU 103 determines that the connection between the AP selected in S403 and the terminal apparatus 101 has been successfully established, the process may proceed to S410. In a case that the CPU 103 determines that the connection between the AP selected in S403 and the terminal apparatus 101 has not been successfully established, the process may proceed to S407. In this mode, before S404, the CPU 103 may determine whether the wireless profile corresponding to the AP selected in S403 has been stored by the OS of the terminal apparatus 101.

In addition, in a case that the password is entered in S408, the CPU 103 may attempt to establish a connection between the AP selected in S403 and the terminal apparatus 101 using the password entered in S408. Next, the CPU 103 may determine whether the connection between the AP selected in S403 and the terminal apparatus 101 has been successfully established as a result of attempting to establish the connection. Then, in a case that the CPU 103 determines that the connection between the AP selected in S403 and the terminal apparatus 101 has been successfully established, the process may proceed to S409. In a case that the CPU 103 determines that the connection between the AP selected in S403 and the terminal apparatus 101 has not been successfully established, the process may proceed to S408.

In a case where the wireless LAN router enables a plurality of APs that use different frequency bands, the same password may be used by the different APs. Therefore, after the AP is selected in S403, the CPU 103 may determine whether a frequency band used by the AP selected in S403 is different from a frequency band used by the AP 131 that was previously connected in S302. In a case that the CPU 103 determines that the frequency band used by the AP selected in S403 is different from the frequency band used by the AP 131 that was previously connected in S302, the process may proceed to S404 or S405. In a case that the CPU 103 determines that the frequency band used by the AP selected in S403 is the same as the frequency band used by the AP 131 that was previously connected in S302, the process may proceed to S408.

In the above description, the process proceeds to the processing in S406 immediately after the processing in S405. However, the process is not limited thereto. For example, after the processing in S405, the CPU 103 may display a screen for checking whether an attempt to establish a connection using the password of the AP 131 that was previously connected in S302 is permitted. In a case that the CPU 103 receives an entry indicating that the attempt to establish the connection using the password of the AP 131 that was previously connected in S302 is made, the process may proceed to S406. In a case that the CPU 103 receives an entry indicating that the attempt to establish the connection using the password of the AP 131 that was previously connected in S302 will is not made, the process may proceed to S408.

The object of various embodiments of the present disclosure can be achieved by supplying a storage medium (storing a program code of software) for implementing the example functions described above to a system or an apparatus and a computer (or CPU or MPU, for example) of the system or the apparatus reading and executing the program code stored in the storage medium. In such cases, the program code read from the storage medium, when executed, implements the functions described above, and the storage medium storing the program code is included within the scope of the present disclosure.

As the storage medium for supplying the program code, for example, a flexible disk, a hard disk, an optical disc, a magneto-optical disc, a CD-ROM, a CD-R, a magnetic tape, a nonvolatile memory card, a ROM, a DVD, and the like can be used.

The computer reads and executes the program code to not only implement the functions described in the above description of embodiments but also performs some or all of the processes executed by the operating system (OS) or the like on the computer so as to implement the functions described above by the processes.

The present disclosure includes the following configurations. Configuration 1

A method of controlling an information processing apparatus including a predetermined application program and capable of communicating with a communication apparatus to execute:
acquiring, by using the predetermined application program, a predetermined password from a predetermined wireless profile managed by an operating system (OS) of the information processing apparatus and corresponding to a first access point;
executing, by using the predetermined application program, first attempt processing that is processing for attempting establishment of a connection between a second access point different from the first access point and the information processing apparatus using the predetermined password acquired from the predetermined wireless profile; and
transmitting, by using the predetermined application program, the predetermined password acquired from the predetermined wireless profile and information for specifying the second access point to the communication apparatus based on success of the establishment of the connection between the second access point and the information processing apparatus by the first attempt processing.

### Configuration 2

The method according to Configuration 1, further causing the information processing apparatus to execute:
receiving, from a user, a predetermined operation on a screen displayed by the predetermined application program, wherein
the first access point is an access point to which the information processing apparatus is connected when the predetermined operation is received.

### Configuration 3

The method according to Configuration 1 or 2, further causing the information processing apparatus to execute:
acquiring a list of one or more access points found in a search performed by the communication apparatus; and
receiving, from a user, selection of any one of the one or more access points from the list in a case where the list does not include the first access point, wherein
the second access point is selected by the user from the list,
in a case where the list does not include the first access point, the predetermined password acquired from the predetermined wireless profile and the information for specifying the second access point are transmitted to the communication apparatus, and
in a case where the first access point is included in the list, the predetermined password acquired from the wireless profile and information for specifying the first access point are transmitted to the communication apparatus.

### Configuration 4

The method according to Configuration 3, further causing the information processing apparatus to execute:
executing, by using the predetermined application program, first attempt processing that is processing for attempting establishment of a connection between the second access point and the information processing apparatus using the predetermined password acquired from the predetermined wireless profile in a case where the list does not include the first access point, wherein in a case where the list does not include the first access point, the predetermined password acquired from the predetermined wireless profile and the information for specifying the second access point are transmitted to the communication apparatus based on success of the establishment of the connection between the second access point and the information processing apparatus by the first attempt processing.

### Configuration 5

The method according to Configuration 4, further causing the information processing apparatus to execute:
receiving, by using the predetermined application program, an entry of a password for connection to the second access point from the user based on failure of the establishment of the connection between the second access point and the information processing apparatus by the first attempt processing in a case where the list does not include the first access point, wherein
the password for connection to the second access point entered in the predetermined application program and the information for specifying the second access point are transmitted to the communication apparatus based on the reception of the entry of the password for connection to the second access point in a case where the list does not include the first access point.

### Configuration 6

The method according to Configuration 5, further causing the information processing apparatus to execute:
executing, by using the predetermined application program, second attempt processing that is processing for attempting establishment of a connection between the second access point and the information processing apparatus using the password for connection to the second access point entered in the predetermined application program based on the reception of the entry of the password for connection to the second access point in a case where the list does not include the first access point, wherein
the password for connection to the access second point entered in the predetermined application program and the information for specifying the second access point are transmitted to the communication apparatus based on success of the establishment of the connection between the second access point and the information processing apparatus by the second attempt processing.

### Configuration 7

The method according to Configuration 6, wherein in a case that the establishment of the connection between the second access point and the information processing apparatus by the second attempt processing fails, processing for receiving, by using the predetermined application program, an entry of a password for connection to the second access point from the user is executed.

### Configuration 8

The method according to any one of Configurations 4 to 7, wherein
the first attempt processing is executed based on the predetermined password acquired from the predetermined wireless profile and meeting a condition regarding a character string permitted as a password for an encryption method used by the second access point in a case where the list does not include the first access point, and
the first attempt processing is not executed based on the predetermined password acquired from the predetermined wireless profile and not meeting the condition regarding the character string permitted as the password for the encryption method used by the second access point in a case where the list does not include the first access point.

### Configuration 9

The method according to Configuration 8, further causing the information processing apparatus to execute:
receiving, by using the predetermined application program, an entry of a password for connection to the second access point from the user based on the predetermined password acquired from the predetermined wireless profile and not meeting the condition regarding the character string permitted as the password for the encryption method used by the second access point in a case where the list does not include the first access point, wherein
the password for connection to the second access point entered in the predetermined application program and the information for specifying the second access point are transmitted to the communication apparatus based on the reception of the entry of the password for connection to the second access point from the user.

### Configuration 10

The method according to Configuration 8, further causing the information processing apparatus to execute:
acquiring, by using the predetermined application program, a second password from a second wireless profile managed by the OS of the information processing apparatus and corresponding to the second access point based on the predetermined password acquired form the predetermined wireless profile and not meeting the condition regarding the character string permitted as the password for the encryption method used by the second access point in a case where the list does not include the first access point; and
executing, by using the predetermined application program, third attempt processing that is processing for attempting establishment of a connection between the second access point and the information processing apparatus using the second password acquired from the second wireless profile, wherein
the second password acquired from the second wireless profile and the information for specifying the second access point are transmitted to the communication apparatus based on success of the establishment of the connection between the second access point and the information processing apparatus by the third attempt processing.

### Configuration 11

The method according to any one of Configurations 4 to 7, wherein
the first attempt processing is executed based on a match between an encryption method used by the first access point and an encryption method used by the second access point in a case where the list does not include the first access point, and
the first attempt processing is not executed based on a mismatch between the encryption method used by the first access point and the encryption method used by the second access point in a case where the list does not include the first access point. Configuration 12

The method according to Configuration 11, further causing the information processing apparatus to execute:
receiving, by using the predetermined application program, an entry of a password for connection to the second access point from the user based on a mismatch between the encryption method used by the first access point and the encryption method used by the second access point in a case where the list does not include the first access point,
wherein
the password for connection to the second access point entered in the predetermined application program and the information for specifying the second access point are transmitted to the communication apparatus based on the reception of the entry of the password for connection to the second access point from the user.

### Configuration 13

The method according to Configuration 11, further causing the information processing apparatus to execute:
acquiring, by using the predetermined application program, a second password from a second wireless profile managed by the OS of the information processing apparatus and corresponding to the second access point based on a mismatch between the encryption method used by the first access point and the encryption method used by the second access point in a case where the list does not include the first access point; and
executing, by using the predetermined application program, third attempt processing that is processing for attempting establishment of a connection between the second access point and the information processing apparatus using the second password acquired from the second wireless profile, wherein
the second password acquired from the second wireless profile and the information for specifying the second access point are transmitted to the communication apparatus based on success of the establishment of the connection between the second access point and the information processing apparatus by the third attempt processing. Configuration 14

The method according to any one of Configurations 4 to 13, further causing the information processing apparatus to execute:
disconnecting the connection between the second access point and the information processing apparatus after success of the establishment of the connection between the second access point and the information processing apparatus by the first attempt processing; and
establishing a connection between the communication apparatus and the information processing apparatus after the disconnection of the connection between the second access point and the information processing apparatus.

### Configuration 15

The method according to any one of Configurations 4 to 15 further causing the information processing apparatus to execute:
disconnecting a connection between the first access point and the information processing apparatus;
establishing a connection between the communication apparatus and the information processing apparatus after the disconnection of the connection between the first access point and the information processing apparatus; and
disconnecting the connection between the communication apparatus and the information processing apparatus after the list is acquired via the connection between the communication apparatus and the information processing apparatus, wherein
the first attempt processing is executed after the disconnection of the connection between the communication apparatus and the information processing apparatus. Configuration 16

The method according to any one of Configurations 1 to 15, wherein the predetermined password acquired from the predetermined wireless profile and the information for specifying the second access point different from the first access point are transmitted to the communication apparatus by Wi-Fi (registered trademark). Configuration 17

The method according to any one of Configurations 1 to 15, wherein the predetermined password acquired from the predetermined wireless profile and the information for specifying the second access point different from the first access point are transmitted to the communication apparatus by Bluetooth (registered trademark). Configuration 18

The method according to any one of Configurations 1 to 17, further causing the information processing apparatus to execute:
transmitting, by using the predetermined application program, at least one of a print job for causing the communication apparatus to perform printing and a scan job for causing the communication apparatus to perform scanning.

### Configuration 19

The method according to any one of Configurations 1 to 18, wherein the information for specifying the second access point is identification information of the second access point.

### Configuration 20

The method according to Configuration 19, wherein the information for specifying the second access point is a service set identifier (SSID) of the second access point.

### Configuration 21

A program, that is the predetermined application program, including computer-readable instructions for carrying out the method according to any one of Configurations 1 to 20.

### Configuration 22

An information processing apparatus including a predetermined application program and capable of communicating with a communication apparatus, the information processing apparatus including:
an acquiring unit that acquires, by the predetermined application program, a predetermined password from a predetermined wireless profile managed by an operating system (OS) of the information processing apparatus and corresponding to a first access point;
an attempting unit that executes, by the predetermined application program, first attempt processing that is processing for attempting establishment of a connection between a second access point different from the first access point and the information processing apparatus using the predetermined password acquired from the predetermined wireless profile; and
a transmitting unit that transmits, by the predetermined application program, the predetermined password acquired from the predetermined wireless profile and information for specifying a second access point different from the first access point to the communication apparatus present outside the information processing apparatus, the first access point, and the second access point.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present invention has been described with reference to embodiments, it is to be understood that the invention is not limited to the disclosed embodiments but is defined by the scope of the following claims.

## Claims

1. A method of controlling an information processing apparatus (101) including a predetermined application program and capable of communicating with a communication apparatus (151) to execute:
acquiring (S302), by using the predetermined application program, a predetermined password from a predetermined wireless profile managed by an operating system (OS) of the information processing apparatus (101) and corresponding to a first access point;
executing (S405), by using the predetermined application program, first attempt processing that is processing for attempting establishment of a connection between a second access point different from the first access point and the information processing apparatus (101) using the predetermined password acquired from the predetermined wireless profile; and
transmitting (S305), by using the predetermined application program, the predetermined password acquired from the predetermined wireless profile and information for specifying the second access point to the communication apparatus (151) based on success of the establishment of the connection between the second access point and the information processing apparatus (101) by the first attempt processing.

2. The method according to Claim 1, further causing the information processing apparatus (101) to execute:
receiving, from a user, a predetermined operation on a screen displayed by the predetermined application program,, wherein
the first access point is an access point to which the information processing apparatus (101) is connected when the predetermined operation is received.

3. The method according to Claim 2, further causing the information processing apparatus (101) to execute:
displaying (S403) a list of one or more access points; and
receiving (S403), from the user, selection of any one of the one or more access points from the list, wherein
the second access point is an access point selected by the user from the list.

4. The method according to Claim 3, wherein
the list is a list of the one or more access points found in a search performed by the communication apparatus (151),
in a case where the list does not include the first access point, the predetermined password acquired from the predetermined wireless profile and the information for specifying the second access point are transmitted to the communication apparatus (151) based on success of the establishment of the connection between the second access point and the information processing apparatus (101) by the first attempt processing, and
in a case where the list includes the first access point, the predetermined password acquired from the predetermined wireless profile and information for specifying the first access point are transmitted to the communication apparatus (151) without executing the first attempt processing.

5. The method according to any one of the preceding Claims further causing the information processing apparatus (101) to execute:
receiving (S408), by using the predetermined application program, an entry of a password for connection to the second access point from a user based on failure of the establishment of the connection between the second access point and the information processing apparatus (101) by the first attempt processing, wherein
the password for connection to the second access point entered in the predetermined application program and the information for specifying the second access point are transmitted to the communication apparatus (151) based on the reception of the entry of the password for connection to the second access point.

6. The method according to Claim 5, further causing the information processing apparatus (101) to execute:
executing, by using the predetermined application program, second attempt processing that is processing for attempting establishment of a connection between the second access point and the information processing apparatus (101) using the password for connection to the second access point entered in the predetermined application program, based on the reception of the entry of the password for connection to the second access point, wherein
the password for connection to the second access point entered in the predetermined application program and the information for specifying the second access point are transmitted to the communication apparatus (151) based on success of the establishment of the connection between the second access point and the information processing apparatus (101) by the second attempt processing.

7. The method according to Claim 6, wherein
in a case that the establishment of the connection between the second access point and the information processing apparatus (101) by the second attempt processing fails, processing for receiving, by using the predetermined application program, an entry of a password for connection to the second access point from the user again is executed.

8. The method according to any one of the preceding Claims, wherein
the first attempt processing is executed based on the predetermined password acquired from the predetermined wireless profile and meeting a condition regarding a character string permitted as a password for an encryption method used by the second access point,
processing for receiving, by using the predetermined application program, an entry of a password for connection to the second access point from a user is executed without executing the first attempt processing, based on the predetermined password acquired from the predetermined wireless profile and not meeting the condition regarding the character string permitted as the password for the encryption method used by the second access point, and
the password for connection to the second access point entered in the predetermined application program and the information for specifying the second access point are transmitted to the communication apparatus (151) based on the reception of the entry of the password for connection to the second access point from the user.

9. The method according to any one of the preceding Claims, wherein
the first attempt processing is executed based on a match between an encryption method used by the first access point and an encryption method used by the second access point,
processing for receiving, by using the predetermined application program, an entry of a password for connection to the second access point from a user is executed without executing the first attempt processing, based on a mismatch between the encryption method used by the first access point and the encryption method used by the second access point, and
the password for connection to the second access point entered in the predetermined application program and the information for specifying the second access point are transmitted to the communication apparatus (151) based on the reception of the entry of the password for connection to the second access point from the user.

10. The method according to any one of the preceding Claims, wherein
the predetermined password acquired from the predetermined wireless profile and the information for specifying the second access point different from the first access point are transmitted to the communication apparatus (151) by at least one of Wi-Fi (registered trademark) and Bluetooth (registered trademark).

11. The method according to any one of the preceding Claims, further causing the computer to execute
transmitting at least one of a print job for causing the communication apparatus (151) to perform printing and a scan job for causing the communication apparatus (151) to perform scanning.

12. The method according to any one of the preceding Claims, wherein
the information for specifying the second access point is a service set identifier (SSID) of the second access point.

13. The method according to any one of the preceding Claims, wherein
a frequency band used by the first access point is different from a frequency band used by the second access point.

14. A program, that is the predetermined application program, comprising computer readable instructions for carrying out the method according to any one of the preceding claims.

15. An information processing apparatus (101) including a predetermined application program and capable of communicating with a communication apparatus (151), the information processing apparatus (101) comprising:
an acquiring unit (103) that acquires, by the predetermined application program, a predetermined password from a predetermined wireless profile managed by an operating system (OS) of the information processing apparatus (101) and corresponding to a first access point;
an attempting unit (103) that executes, by the predetermined application program, first attempt processing that is processing for attempting establishment of a connection between a second access point different from the first access point and the information processing apparatus (101) using the predetermined password acquired from the predetermined wireless profile; and
a transmitting unit (103) that transmits, by the predetermined application program, the predetermined password acquired from the predetermined wireless profile and information for specifying the second access point to the communication apparatus (151) based on success of the establishment of the connection between the second access point and the information processing apparatus (101) by the first attempt processing.
